# EUROPEAN PATENT APPLICATION

(11) **EP 3 779 186 A1**
(43) Date of publication of application: **17.02.2021**
(21) Application number: 19191768.1
(22) Date of filing: 14.08.2019
(51) Int. Cl.: F03D 7/04

(54) **METHOD FOR COMPUTER-IMPLEMENTED DETERMINATION OF CONTROL PARAMETERS OF A TURBINE**

(71) Applicant: Siemens Gamesa Renewable Energy A/S, 7330 Brande (DK)
(72) Inventor: Azar, Ziad, Sheffield, South Yorkshire S10 4ED (GB); Clark, Richard, Worrall Sheffield, S35 0AF (GB); Duke, Alexander, Sheffield, S10 5SN (GB); Thomas, Arwyn, Cheshire, SK8 6HW (GB); Wu, Zhan-Yuan, Sheffield, South Yorkshire S10 4BB (GB)
(74) Representative: Aspacher, Karl-Georg

(57) **Abstract**

The invention describes a method for computer-implemented determination of improved control parameters (CP) of a turbine (T1,...,Tn) by consideration of a lifetime information. The turbine (T1,..., Tn) is either a wind turbine having a generator or a gas turbine having a generator. The method considers the impact of individual turbine manufacturing tolerances on the turbine performance, thereby avoiding under-utilization of those wind turbines. The invention comprises the steps of: receiving, by an interface (IF), actual operation (OC) parameters of the turbine (T1,...,Tn) and/or ambient condition (AC) information; determining, by a processing unit (PU), a lifetime information (RLT) about a residual lifetime of the turbine (T1,...,Tn) or a turbine component by a simulation of the operation of the turbine (T1,...,Tn), the simulation being made with a given turbine model (TM) in which the actual operation (OC) parameters of the turbine (T1,...,Tn) and/or ambient condition (AC) information and one or more characteristic values (AG, MP, MDM, TC, CR) of the turbine (T1,...,Tn) are used as input parameters; and deriving, by the processing unit (PU), the control parameters (CP) for the turbine (T1,...,Tn) from lifetime information (RLT).

## Description

The invention relates to a method and a system for computer-implemented determination of control parameters of a turbine.

The operation of wind turbines (short: turbines) is based on nominal characteristic values of the wind turbine which characterize the wind turbines in terms of power output in dependency of wind speed. Using the nominal parameters enables the manufacturer of the wind turbine to guarantee specific annual energy production (AEP) to customers as the wind turbines are treated as having identical performance over its contractual wind speed power curve and rated power operating point.

The nominal parameters therefore are used as a basis to derive turbine control parameters with regard to a specific power output at specific ambient conditions. As the AEP can be regarded as a measure indicating the performance and/or efficiency of a turbine, it would be desirable to be able to adapt the control parameters in a way to increase the AEP as much as possible without damaging effects for the turbine, e.g. overloading of components or reducing lifetime.

The same problems arise in other industrial processes, such as the operation of gas turbines.

It is therefore an object of the present invention to provide a method and a system for computer-implemented determination of improved control parameters of a turbine. It is a further object of the present invention to provide a computer program product.

These objects are solved by a method according to the features of claim 1, a computer program product according to claim 14 and a system according to the features of claim 15. Preferred embodiments are set out in the dependent claims.

According to a first aspect of the present invention, a method for computer-implemented determination of control parameters of a turbine is suggested. The turbine may be a single wind turbine. The turbine may be a wind turbine of a wind park. In case the turbine is a wind turbine it comprises a generator. Alternatively, the turbine may be a gas turbine having a generator.

The method comprises the steps of receiving, by an interface, actual operation parameters, including manufacturing tolerances, of the turbine and/or ambient condition information; determining, by a processing unit, a lifetime information about a residual lifetime of the turbine or a turbine component by a simulation of the operation of the turbine, the simulation being made with a given turbine model in which the actual operation parameters of the turbine and/or ambient condition information and one or more characteristic values of the turbine are used as input parameters; and deriving, by the processing unit, the control parameters for the turbine from the lifetime information.

This method is based on the consideration that the lifetime of key wear-out components can have significant influence on the operation and maintenance cost of a turbine. For example, a generator electrical insulation has a finite lifetime determined by the thermal cycling of the generator. Therefore, those components might be over-designed and/or lifetime is under-utilized. By using the turbine-specific turbine model to evaluate a particular parameter, the lifetime of a turbine can be monitored, and the decision can be made as to how much power the turbine can generate utilizing the maximum lifetime or utilize lifetime in the most profitable manner.

According to a preferred embodiment, the control parameters for the turbine are derived from the actual operation parameters of the turbine and/or ambient condition information. Alternatively or in addition, the control parameters for the turbine may be derived from a grid demand to which grid the wind turbine is connected to.

According to a further preferred embodiment, a register with the lifetime information about the residual lifetime of the turbine or a turbine component is continually updated. The data stored in the database may be used to modify newly manufactured turbine and their operation and service methods. It is preferred to estimate the lifetime information based on load conditions in the past and expected load conditions according to the derived control parameters. Its trajectory can be monitored and adjusted by altering an expected or desired load demand. By applying this management to a plurality of turbines, for example of a wind park, the power production in the wind park may be maximized within its designed lifetime, or even beyond.

The lifetime information may be estimated based on a material parameter of one or more turbine components which is evaluated on one or more virtual temperatures and/or electric parameters and/or mechanical parameters derived from the given turbine model. According to this embodiment, the turbine model is used to provide an estimate of the wind turbine lifetime instead of using real measurement data of the turbine (although actual sensor data could be used as well). These sensor data of the wind turbine may be used as an input comparator for the turbine model, in order to ensure the accuracy of results. In order to provide tailored lifetime estimation based on the characteristics of the wind turbine, turbine specific manufacturing data is considered in the turbine model. This allows evaluating component lifetimes at the end of a planned operation period, and then accordingly extending the operation time of those wind turbines that still have lifetime in their components. This allows for maximizing the ratio between AEP and costs. Further, a decision can be made as to how much power the turbine can generate utilizing the maximum lifetime or utilize lifetime in the most profitable manner, for example, by overloading/boosting in consideration of an electricity price (i.e. when the price is high), and conversely reserving lifetime when the price is low.

The lifetime information may be estimated based on a material parameter of one or more turbine components which is evaluated on one or more virtual temperatures and/or electric parameters and/or mechanical parameters derived from the given turbine model. The estimated lifetime information may be stored in a database and continually updated.

The use of the turbine model-based system allows for a wider array of temperatures to be predicted and/or monitored without the need for additional physical sensors which increase complexity and cost. This can, for example, be applied to the generator electrical insulation by virtually monitoring key areas, which cannot be monitored by sensors at critical locations. By doing so, remaining lifetime can be continually estimated. This allows for a full usage of the generator insulation lifetime maximizing the profitability of the turbine when conditions allow for the turbine performance to be extended. Apart from turbine generators, other electrical motors such as those that power the fans of the turbine can also be monitored virtually in terms of performance and temperature of windings in order to accurately estimate the thermal lifetime.

This embodiment may also be used to manage the structural lifetime of the turbine. By taking the ambient conditions of the turbine and the known manufacturing tolerances and structural characteristics of the turbines, the fatigue on key components can be estimated and calculated from proprietary models of the wind turbines.

In this embodiment, the turbine model is used in order to estimate certain operating temperatures, power usage and loads. The turbine model introduces a level of model fidelity that allows these different scenarios to be modelled for health monitoring and increasing lifetime and AEP, respectively. It also allows for forecasting of performance. For example, it can be used to assess the AEP that can be achieved after modifying control parameters in order to maximize lifetime.

Use of the turbine model is based on the consideration that there may be an under-utilization of the wind turbines due to a lack of consideration of the impact of individual turbine manufacturing data on its turbine performance.

Considering suitable characteristic values for the turbine enables forming a tailored turbine "DNA" which can be regarded as a unique map of characterizing turbine parameters. Having knowledge about manufacturing tolerances of the turbine, a given turbine model can be fed with the characteristic values to determine whether a specific turbine is able to produce more power compared to only considering nominal parameters. In case of a wind turbine, the determination whether or not a turbine is able to be controlled with improved control parameters to calculate its theoretical power output at a given wind speed will be derived from an associated power versus wind speed map which can be derived from the output of the given turbine model which processes the one or more characteristic values of the wind turbines as input parameters.

Hence, the characteristic values are considered in a turbine model to derive actual and turbine specific control parameters from an associated power versus wind speed map. This mechanism on power maximization by using the given turbine model does not have negative impact to the existing turbine structure, such as generator, power converter, etc. as their operation is considering nominal and/or actual characteristic values.

Where the actual characteristic values of a specific turbine are, for example, better than the nominal parameters on which they are ordinally operated, it is possible - while providing a safe mechanism without damaging the turbine - of making use of this additional margin resulting in higher AEP levels. Hence, considering the characteristic values allows an operation of the turbines in an optimized manner based on its DNA.

According to a preferred embodiment, the turbine model is a physical model which is based on a number of equations found by simulations and/or validated test data and/or look-up tables. The turbine model may, in addition, consider a number of measured performance parameters, such as temperatures, current load profile, etc. to determine the lifetime information.

The one or more characteristic values may be retrieved and received, by the interface, from a database. The interface and the processing unit are part of a computer system. The computer system may be part of a controlling instance of the turbine. Alternatively, the computer system may be part of an external controlling system. The database may be stored on that computer system or may be an external database connected to the computer system. The one or more characteristic values consist nominal parameters of the characteristic values (i.e. nominal characteristic values) and/or actual or achieved values within a manufacturing tolerance band of the characteristic values (i.e. actual characteristic values) obtained by measurement during the manufacturing process and collated, for each of the number of turbines, in the database.

The one or more characteristic values include one or more of: an airgap (between a rotor and a stator), a magnet performance, a magnet dimension, a thermal conductivity, and a coil resistance. In addition to the characteristic values, further characteristic values may be considered as well, such as a magnet material, a thermal performance of the coil, variations of stator segments and so on.

According to a further preferred embodiment, as further input parameters of the turbine model historical turbine sensor data and/or historical operating conditions are processed for determining, by the processing unit, for the turbine, the lifetime information. Considering historical sensor data captured by physical and/or virtual sensors enables to receive information about the behavior of components with respect to lifetime considerations. Historical sensor data to be considered may consist of ambient temperatures, wind speed, among others. The historical data may be compared with real-time sensor data during the operation of the turbine. A comparison of measured lifetime data with those resulting from the turbine model allows for a flexible exploitation of generous manufacturing margins to push the turbines harder and thus increase, in case of a wind turbine, AEP. Furthermore, health monitoring features can be gained through the comparison measured sensor data against those predicted by the turbine model.

According to a further preferred embodiment, the turbine model considers a drive train consisting of a rotor hub, a generator, a converter, and a transformer of the wind turbine. In case of a gas turbine, the turbine model considers a drive train consisting of a rotor hub, a motor and a converter. In addition or alternatively, the turbine model may consider blades and/or gearbox and/or nacelle and/or tower and/or cable and/or a transformer of a specific turbine.

According to a second aspect of the present invention, a computer program product directly loadable into the internal memory of a digital computer is suggested, comprising software code portions for performing the steps of the method described herein when said product is run on a computer. The computer program product may be in the form of a storage medium, such as a CD-ROM, DVD, USB-stick or a memory card. The computer program product may also be in the form of a signal which is transferable via a wired or wireless communication line.

According to a third aspect, a system for computer-implemented determination of improved control parameters of a turbine is suggested. The turbine may be a single wind turbine or a wind turbine of a wind park having a generator or a gas turbine having a generator. The system comprises an interface which is adapted to receive actual operation parameters of the turbine and/or ambient condition information, and a processing unit which is adapted to determine a lifetime information about a residual lifetime of the turbine or a turbine component by a simulation of the operation of the turbine, the simulation being made with a given turbine model in which the actual operation parameters of the turbine and/or ambient condition information and one or more characteristic values of the turbine are used as input parameters, and derive the control parameters for the turbine from the lifetime information.

The invention will be explained in more detail by reference to the accompanying figures.
- Fig. 1: shows a schematic diagram illustrating the steps for carrying out a method for determination of improved control parameters of a number of wind turbines of a wind park.
- Fig. 2: illustrates a schematic diagram illustrating a turbine model which is used to determine improved control parameters of a wind turbine.
- Fig. 3: illustrates a schematic diagram of a flowchart in which control parameters are determined considering a lifetime estimation of components of a specific wind turbine.

In the following section, an example of the invention will be described by referring to a wind turbine. As will be understood by the skilled person, the method can be used in other industrial applications as well, in particular in the field of gas turbines.

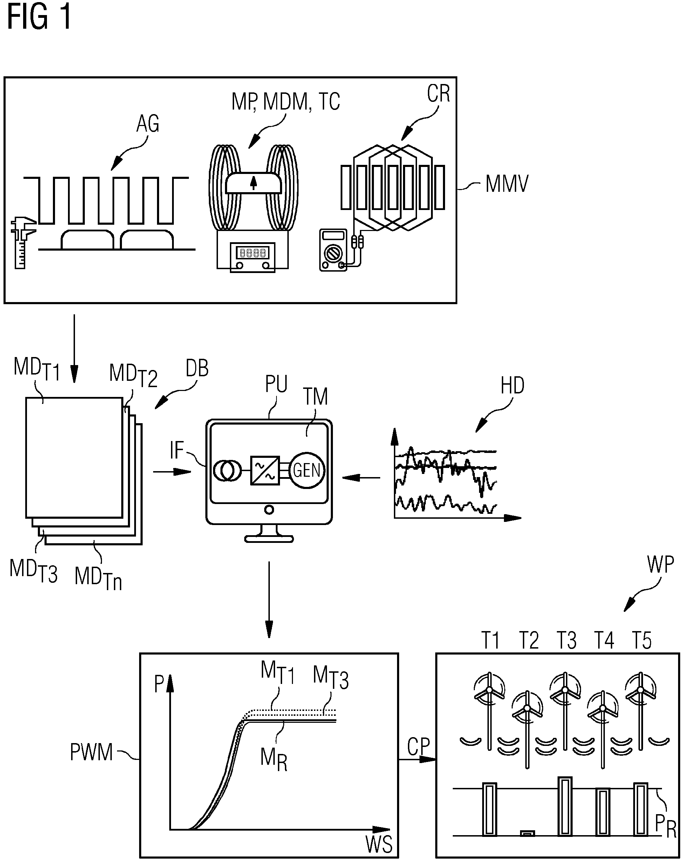

Fig. 1 show as schematic diagram illustrating the steps to determine improved control parameters of a number of wind turbines of a wind park. The steps of this method may be used as a starting point of the patent invention. Although the below described example refers to a wind park with a plurality of wind turbines, it is to be understood, that the number of wind turbines may be arbitrary. The number of wind turbines may be one (1), i.e. the wind park corresponds to a single wind turbine. If the number of wind turbines is greater than one, the wind turbines preferably are arranged in proximity to each other, to supply the total produced power at a single point to an energy grid.

The method and the turbine model preferably consider the impact of individual turbine manufacturing tolerances on the turbine performance, thereby avoiding under-utilization of those wind turbines. Due to the consideration of individual turbine manufacturing tolerances, at least some of them are able to be operated in an above rated manner resulting in an increasing AEP of the wind park. However, it is to be understood the turbine model can be fed with nominal characteristic values as well. In a further implementation, both nominal characteristic values and actual characteristic values considering the manufacturing tolerances may be used as input information in the turbine model.

Referring to Fig. 1, in a first or preparing step, measurement of manufacturing data MMV is executed. Manufacturing tolerances having an impact on the turbine performance are, for example, an airgap AG, a magnet performance MP (as a result of the magnet material and/or dimensions MDM and/or manufacturing processes), thermal conductivity TC, and coil resistance CR. Each of these manufacturing tolerances are characteristic values which are individual for each turbine to be considered. The manufacturing tolerances of these characteristic values AG, MP, MDM, TC, CR do have an immediate impact on the turbine performance.

The manufacturing tolerances, typically different for every turbine (turbine DNA), of the characteristic values AG, MP, MDM, TC, CR are collated and stored in a database DB. For each turbine T1, ..., Tn (where n corresponds to the number of wind turbines in the wind park), a manufacturing dataset MD_{T1}, ..., MD_{Tn} may be stored containing the characteristic values AG, MP, MDM, TC, CR. The manufacturing dataset MD_{T1}, ...,MD_{Tn} may be regarded as DNA of each individual wind turbine T1, ...,Tn. It is to be understood that, for the present invention, storing of manufacturing data consisting of the manufacturing tolerances of characteristic values AG, MP, MDM, TC, CR may be made in any way, such as a lookup-table, associated maps, etc.

The manufacturing tolerances of the characteristic values AG, MP, MDM, TC, CR are received at the interface IF of a computer or computer system. The computer or computer system comprises the processing unit PU. The database DB may be stored in a memory of the computer (system) or an external storage of the computer (system). The database DB may be cloud based in another implementation. The processing unit PU is adapted to determine, for each of the number of wind turbines T1, ..., Tn, a power versus wind speed map M_{T1}, ..., M_{Tn}. The power versus wind speed map M_{T1},. ..., M_{Tn} is calculated from a given turbine model with the manufacturing tolerances of the characteristic values AG, MP, MDM, TC, CR of the respective wind turbines T1, ..., Tn as input parameters.

For each type of wind turbine, a specific turbine model may be provided. In an alternative embodiment, a specific turbine model may be used for a respective wind turbine of the wind park. In a further alternative embodiment, a common turbine model may be used for all wind turbines of the wind park.

The turbine model is a physical model which is based on a number of equations found by simulations and/or validated test data and/or look-up tables. The turbine model can be regarded as a "digital twin" for each individual wind turbine. The power versus wind speed maps M_{T1}, ..., M_{Tn} of each individual wind turbine T1, ..., Tn are unique maps resulting from the turbine model and the manufacturing tolerances of the characteristic values AG, MP, MDM, TC, CR.

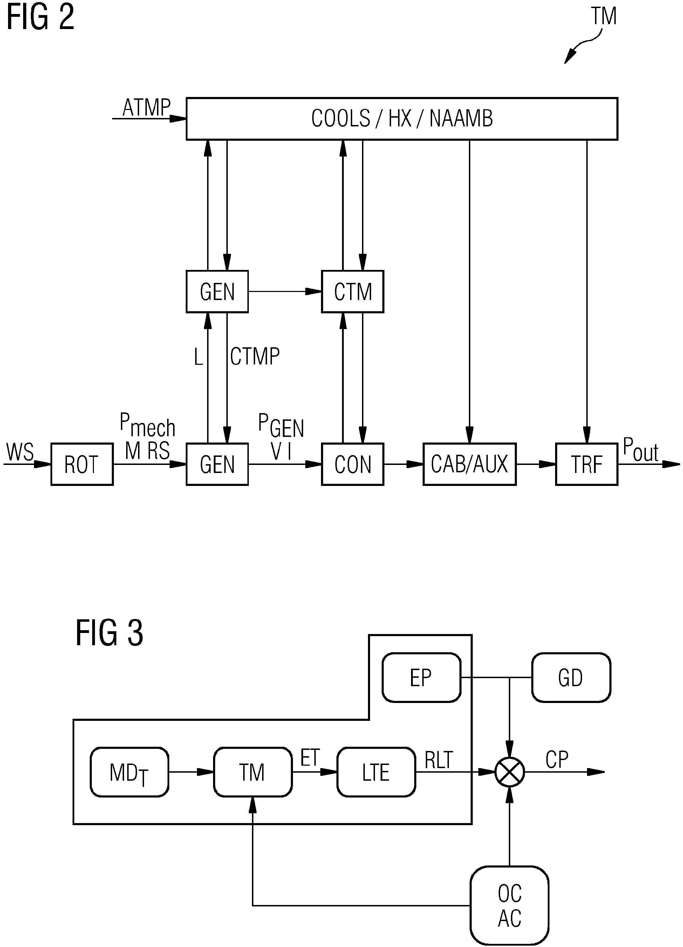

Fig. 2 illustrates an embodiment of the turbine model TM used to model an individual wind turbine. In this embodiment, the turbine model TM considers an electrical drive train of the wind turbines consisting of a rotor hub ROT, a generator GEN, a converter CON, cables CAB and auxiliary/ancillary components AUX, and a transformer TRF. However, the turbine model TM can also consider further components of the wind turbine, such as blades, nacelle, tower, sub-stations, gearbox (for geared-drive turbine) and so on.

The turbine model TM calculates the losses of components within the drive train to account for the loss in power/energy between the turbine blade input and the (grid) output during the electromechanical energy conversion and ancillary or supporting systems. As the loss mechanisms are temperature dependent and themselves generate heat, the turbine model TM is coupled or includes a thermal model for the generator GEN (generator thermal model GTM) and/or a thermal model for the converter CON (converter thermal model CTM) and is solved iteratively. The generator thermal model GTM and the converter thermal model CTM are coupled to components affecting the cooling of the drive train, such as cooling system COOLS (e.g. cooling fans), heat exchanger HX, and nacelle ambient NAAMB.

The turbine model TM calculates the available power Pₒᵤₜ at the (grid) output based on the input ambient conditions of wind speed WS and temperature ATMP. The turbine model TM can be used to assess the potential AEP for a given wind turbine and site by inputting historical and/or predicted wind conditions over a given period of time. The use of the thermal models GTM, CTM allows for any control features such as high temperature curtailment to be accounted for accurately. Alternatively, the turbine model TM can be employed in real time to assess the potential output and/or impact of control decisions on a specific generator operating point. Furthermore, it may be used as reference against the actual turbine comparing actual and predicted operation in response to the operating conditions to act as a health monitor.

The thermal model allows for accurate prediction of the temperatures of a wide range of components within the drive train, without necessarily adding the cost and complexity of a wide range of sensors.

The turbine model TM can be implemented in a number of different environments/programming codes. Typically, it may be based on iterative solver routines to handle both thermal coupling and control algorithms. Where possible, reduced order models, look-up tables or functions (equations) are used to represent complex behaviors using suitable approximations and/or assumptions to ensure short computation times whilst maintaining a suitable level of accuracy.

The turbine model TM, as shown in Fig. 2, may be extended to include blade models or structural models of the turbine. Such a model can be used to represent any electrical drive/generator system beyond the wind turbine.

More detailed the turbine model TM includes the following sub-models:
A rotor model for modelling the rotor ROT by converting wind speed WS into a rotor/blade rotational speed RS and mechanical power P_{mech} (i.e. input torque M) .

An optional bearing model for modelling the bearing by accounting for non-ideal main bearings and hence power loss.

A generator model for modelling the generator GEN by considering the main mechanical to electrical energy conversion accounting for the torque capability, voltage production and losses incurred in conversion: This may be implemented by a numerical computation of the electromagnetic performance (e.g. Finite Element Analysis), an analytical model, or a hybrid of these which uses a Reduced Order Model (ROM) in which the generator performance is derived through a-priori numerical modelling and distilled into simpler functions or look-up tables. The generator model is also adapted to calculate losses incurred in the conversion such as winding copper losses, stator electrical steel iron losses and rotor eddy current losses. It accounts for control decisions.

A converter model for modelling the converter CON: For example, in a direct drive permanent magnet generator the variable frequency output of the generator is interfaced with the fixed frequency grid via a power electronic converter (active rectifier - DC link - inverter) which allows for control of the generator operating conditions. The load dependent switching and conduction losses in the converter are accounted for.

A cable loss model for modelling the cables CAB by consideration of Ohmic losses in connections cables.

An auxiliary/ancillary loss model for modelling auxiliary/ancillary components AUX by accounting for power consumed by supporting services such as cooling fans, pumps and hydraulic control systems as these losses detract from the available power at the grid.

A transformer loss model for modelling the transformer TRF by accounting for Ohmic winding losses and core losses which are dependent on load conditions.

Thermal models of the generator GEN and the converter CON: The performance and losses of the above components are temperature dependent. For example, the resistance and hence copper losses produced by the stator electrical windings increase due to the copper resistivity dependence on temperature and the flux produced by a permanent magnet (the field source in the generator) varies due to changes in the material remanence with temperature. As the losses themselves increase component temperature the above loss models are calculated iteratively with the respective thermal model GTM, CTM. As with the generator model, this may be implemented by a Reduced Order model using parameters derived from numerical modelling e.g. CFD and Thermal FEA to create an equivalent circuit or lumped parameter network.

A number of maps M_{R}, M_{T1} and M_{T3} resulting from the turbine model TM is illustrated in the P-WS-diagram (power versus wind speed map PWM) of Fig. 1. In this diagram, a map M_{R} of a wind turbine which is calculated based on nominal parameters (characteristic values) and two maps M_{T1} and M_{T3} for turbines T1, T3 are illustrated. By way of example only, the maps M_{T1} and M_{T3} of the turbines T1, T3 show that (at least some of) the manufacturing tolerances of the characteristic values AG, MP, MDM, TC, CR are different from that of the nominal turbine resulting in an additional power P for a given speed WS.

Based on their associated power versus wind speed maps control parameters CP can be derived for each individual turbine which are used for controlling the wind turbines. In the illustration of Fig. 1, the wind park consists of five turbines T1, ..., T5. The actual power output P1, ..., P5 in relation to a rated output P_{R} of a turbine with nominal characteristic values is indicated below the turbines T1, ..., T5. As can easily be seen, turbines T1, T3 and T5 generate a power output P1, P3, P5 which is above the rated output of a turbine with nominal characteristic values. By pushing turbines T1, T3, T5 harder, the reduced production of turbine T2, which is, for example down for maintenance or an error, can be compensated at least partially. Power output P4 of wind turbine T4 corresponds to the rated output of a turbine with nominal characteristic values. This means, that the manufacturing tolerances of wind turbine T4 is within the specification but not better.

Consideration of the impact of individual turbine manufacturing tolerances on the turbine performance and using them in a turbine model for each individual turbine allows for maximizing of an AEP through a wind park optimization by operating the turbines in an optimized manner at each location based on its individual turbine performance.

If the actual tolerances of a specific turbine are better than the nominal data on which they are ordinary operated, the turbine model TM can provide a safe mechanism of making use of this additional margin with the result of producing higher AEP levels.

Comparing measured lifetime data in the form of historical data AD which are received from the processing unit in addition to the manufacturing data allows for a flexible exploitation of generous manufacturing margins to push the turbines harder safely and thus increase AEP. In addition, the processing unit PU is able to incorporate health monitoring features through a comparison of measured parameters, such as component temperatures against those which may be predicted by the turbine model TM.

The comparison of physical turbine data can be made with the associated turbine model TM to monitor situations where the turbine may be underperforming as well as providing possible insight into reasons of an underperforming. The comparison can flag potential issues and call for servicing as well as providing learning for future turbine development.

According to the present invention, the lifetime of key wear-out components is considered. For example, the electrical insulation of the generator of the wind turbine has a finite lifetime determined by the thermal cycling of the generator. Conventionally, the components lifetime might be under-utilized. Although temperature maximums alone could be used to estimate the lifetime, they may have a large error on the estimation of lifetime.

The turbine model TM can be used to evaluate particular parameters through a virtual temperature and electrical and/or mechanical parameter estimation. A decision can be made as to how much power the turbine can generate utilizing the maximum lifetime or utilize lifetime in the most profitable manner, for example, by overloading/boosting in consideration of an electricity price (i.e. when the price is high), and conversely reserving lifetime when the price is low. This is illustrated in the flowchart of Fig. 3.

Fig. 3 illustrates the turbine model TM which receives, as input parameters, the manufacturing tolerance data MD_{T} of the turbine to be considered and operation conditions OC and/or ambient conditions AC (in general: load conditions) at the place of the wind turbine. The turbine model TM determines one or more virtual temperatures ET by estimation which are used as an input for a lifetime estimation LTE, for example of the electrical insulation. The lifetime estimation LTE is based on a histogram of temperatures. The lifetime estimation LTE is known to the person skilled in the art which is why it is not described in detail. The lifetime estimation LTE results in a residual lifetime RLT of the component to be considered (for example, the electrical insulation) which is used as an input to determine control parameters CP. The control parameters CP are determined based on a combination of the operation conditions OC and/or ambient conditions AC, an electricity price EP and a grid demand GD in addition to the residual lifetime RLT.

A register of available or residual lifetime RLT is continually updated based on the load conditions. Its trajectory can be monitored and adjusted by altering the load demand. This results in adapted control parameters.

By applying this management to each turbine, the power production in a wind park WP may be maximized within its designed lifetime, or even beyond.

According to this procedure, the turbine model TM is used to provide an estimate of the wind turbine lifetime and its residual lifetime RLT, respectively, instead to use inputs direct from external sensors on the wind turbine. The sensors on the turbine may only be used as an input comparator for the turbine model TM in order to ensure the accuracy of the results. The tailored lifetime estimation is based on the characteristics of the turbine, i.e. the turbine specific manufacturing data MD_{T} which are considered in the turbine model. The use of the turbine model allows for a wider array of temperatures to be predicted and/or monitored without the need for additional physical sensors which increase complexity and cost.

Evaluation of component lifetimes at the end of plant operation periods enables extending the operation lifetime of the wind turbines that still have lifetime in their components. This results in a maximized AEP-cost ratio.

While the above-mentioned example has been made with respect to a generator electrical insulation by virtually monitoring key areas which cannot be monitored by sensors at critical locations, remaining lifetime can be continually estimated. This allows for a full usage of the generator insulation lifetime, maximizing the profitability of the turbine when the conditions allow for the turbine performance to be extended.

Apart from the turbine generators, other electrical motors, such as those that power cooling fans, can also be monitored virtually and/or by sensors in terms of performance and temperature of windings in order to accurately estimate the thermal lifetime.

This embodiment can also be used to manage the structural lifetime of the wind turbine. By taking ambient conditions of the wind park and the known manufacturing tolerances and structural characteristics of the turbine into account, the fatigue on key components can be estimated and calculated from proprietary models of the wind turbine.

The "digital twin" can also be utilized to specify hardware changes as well and control parameter changes for turbines. These hardware changes can either be implemented in a revision of the turbine prior or during turbine serial production or retrospectively during turbine servicing.

Although it is preferred to consider manufacturing tolerances of components in the electrical drive train, the turbine model can also consider the whole turbine including blades, tower, bearing, converter and so on. The performance envelope is based on the power versus wind speed maps and thus derived control parameters.

## Claims

1. A method for computer-implemented determination of control parameters (CP) of a turbine (T1,...,Tn), the turbine (T1,..., Tn) being a wind turbine having a generator or a gas turbine having a generator, comprising the steps of:
S1) receiving, by an interface (IF), actual operation (OC) parameters of the turbine (T1,...,Tn) and/or ambient condition (AC) information;
S2) determining, by a processing unit (PU), a lifetime information (RLT) about a residual lifetime of the turbine (T1,...,Tn) or a turbine component by a simulation of the operation of the turbine (T1,...,Tn), the simulation being made with a given turbine model (TM) in which the actual operation (OC) parameters of the turbine (T1,...,Tn) and/or ambient condition (AC) information and one or more characteristic values (AG, MP, MDM, TC, CR) of the turbine (T1,...,Tn) are used as input parameters;
S3) deriving, by the processing unit (PU), the control parameters (CP) for the turbine (T1,...,Tn) from the lifetime information (RLT).

2. The method according to claim 1, wherein the control parameters (CP) for the turbine (T1,...,Tn) are derived from the actual operation (OC) parameters of the turbine (T1,...,Tn) and/or ambient condition (AC) information.

3. The method according to claim 1 or 2, wherein the control parameters (CP) for the turbine (T1,...,Tn) are derived from electricity price (EP) and/or a grid demand to which grid the wind turbine (T1,...,Tn) is connected to.

4. The method according to one of the preceding claims, wherein a register with the lifetime information (RLT) about the residual lifetime of the turbine (T1,...,Tn) or a turbine component is continually updated.

5. The method according to one of the preceding claims, wherein the lifetime information (RLT) is estimated based on load conditions in the past and expected load conditions according to the derived control parameters (CP).

6. The method according to one of the preceding claims, wherein the lifetime information (RLT) is estimated based on a material parameter of one or more turbine components which is evaluated on one or more virtual temperatures and/or electric parameters and/or mechanical parameters derived from the given turbine model (TM).

7. The method according to one of the preceding claims, wherein the turbine model (TM) is a physical model which is based on a number of equations found by simulations and/or validated test data and/or look-up tables.

8. The method according to one of the preceding claims, wherein the one or more characteristic values (AG, MP, MDM, TC, CR) are received from a database (DB).

9. The method according to one of the preceding claims, wherein the one or more characteristic values (AG, MP, MDM, TC, CR) are nominal parameters of the characteristic values (AG, MP, MDM, TC, CR) and/or actual or achieved values within a manufacturing tolerance band of the characteristic values (AG, MP, MDM, TC, CR) are obtained by measurement.

10. The method according to one of the preceding claims, wherein the one or more characteristic values (AG, MP, MDM, TC, CR) includes one or more of:
- airgap (AG);
- magnet performance (MP);
- magnet dimension (MDM);
- thermal conductivity (TC);
- coil resistance (CR).

11. The method according to one of the preceding claims, wherein as further input parameters of the turbine model (TM) historical turbine sensor data and/or operating conditions are processed for determining, by the processing unit (PU), for the turbine (T1,...,Tn), the lifetime information (RLT).

12. The method according to one of the preceding claims, wherein the turbine model (TM) considers a drive train consisting of a rotor hub, a generator or motor, a converter, and a transformer of the wind turbine.

13. The method according to one of the preceding claims, wherein the turbine model (TM) considers blades and/or gearbox and/or nacelle and/or tower and/or cable and/or a transformer of the wind turbine.

14. A computer program product directly loadable into the internal memory of a digital computer, comprising software code portions for performing the steps of one of the preceding claims when said product is run on a computer.

15. A system for computer-implemented determination of control parameters (CP) of a turbine (T1,...,Tn), the turbine (T1,..., Tn) being a wind turbine having a generator or a gas turbine having a generator, comprising
an interface (IF) adapted to:
- receive actual operation (OC) parameters of the turbine (T1,...,Tn) and/or ambient condition (AC) information; and
a processing unit (PU) adapted to:
- determine a lifetime information about a residual lifetime of the turbine (T1,...,Tn) or a turbine component by a simulation of the operation of the turbine (T1,...,Tn), the simulation being made with a given turbine model (TM) in which the actual operation (OC) parameters of the turbine (T1,...,Tn) and/or ambient condition (AC) information and one or more characteristic values (AG, MP, MDM, TC, CR) of the turbine (T1,...,Tn) are used as input parameters; and
- derive the control parameters (CP) for the turbine (T1,...,Tn) from the lifetime information (RLT).
